# EUROPÄISCHE PATENTANMELDUNG

(11) **EP 1 886 974 A2**
(43) Veröffentlichungstag der Anmeldung: **13.02.2008**
(21) Anmeldenummer: 07014886.1
(22) Anmeldetag: 30.07.2007
(51) Int. Cl.: C02F 1/66, C02F 1/28, C02F 103/18

(54) **Vorrichtung zur Neutralisation von sauren Verbrennungskondensaten**

(30) Priorität: 31.07.2006 DE 102006035907; 24.02.2007 DE 102007009108
(71) Anmelder: Freigeber, Jürgen, 42799 Leichlingen (DE)
(72) Erfinder: Freigeber, Jürgen, 42799 Leichlingen (DE)
(74) Vertreter: Sroka, Peter-Christian

(57) **Zusammenfassung**

Eine Vorrichtung zur Neutralisation von sauren Verbrennungskondensaten, enthaltend mindestens einen einen Siebboden (5) aufweisenden Neutralisationsbehälter (2) zur Aufnahme eines granulatförmigen Neutralisationsmittels, das von dem Kondensat durchströmt wird, ist dadurch gekennzeichnet, dass unterhalb des Siebbodens mindestens eine Schlammabsetzkammer (6) angeordnet ist, und dass der Kondensatzulauf (7) oberhalb des Siebbodens (5) benachbart zu diesem an der einen Behälterwand (2.1) und der Konsendatablauf (8) an der gegenüberliegenden Behälterwand (2.2) ebenfalls oberhalb des Siebbodens (5) benachbart zu diesem angeordnet ist.

## Beschreibung

Die Erfindung betrifft eine Vorrichtung zur Neutralisation von sauren Verbrennungskondensaten, enthaltend mindestens einen einen Siebboden aufweisenden Behälter zur Aufnahme eines granulatförmigen Neutralisationsmittels, das von dem Kondensat durchströmt wird.

Die Abgase von gas- oder ölbetriebenen Heizanlagen kühlen sich im Heizkessel und im Schornstein ab. Durch die Abkühlung entsteht ein Kondensat, in dem Säure und Verbrennungsrückstände enthalten sind. Bevor diese Verbrennungskondensate z.B. in einen Kanalanschluss geleitet werden können, müssen sie zuerst gereinigt und dann neutralisiert werden, beispielsweise in einer in der EP 0 174 349 B1 beschriebenen Vorrichtung, bestehend aus einem Durchflussbehälter, in der in Strömungsrichtung des Kondensates nacheinander angeordnet sind eine Quarzkiesschicht, eine Aktivkohleschicht und eine Neutralisationsmittelschicht, die vorzugsweise aus granulatförmigem Magnesiumoxid und/oder Magnesiumcarbonat besteht.

In der DE 35 40 164 A1 ist eine Vorrichtung zur Neutralisation saurer Kondensate aus Abgasen von Heizungsanlagen beschrieben, wobei ein mit einem Zulauf und einem Ablauf ausgestattetes Gehäuse ein Feststoffgranulat aufnimmt, welches von dem Kondensat durchströmt wird und austauschbar ist. Dieses Granulat ist lose in einen oben offenen Einsatz eingeschüttet, der im Bodenbereich Öffnungen, z.B. Sieböffnungen, für den Austritt des Kondensats aufweist und herausnehmbar in das Gehäuse eingesetzt ist, welches oberhalb der Granulatschicht den Zulauf für das Kondensat und am Gehäuseboden den Ablauf aufweist.

Öl- oder gasbetriebene Heizkessel bzw. Brenner sind meist Geräte, die auf dem Boden stehen. Die Entwässerung ist an der tiefsten Stelle des Gerätes angebracht. Dies erfordert eine möglichst flache Bauweise der Neutralisationsanlage, um das Anbringen von zusätzlichen Pumpen etc. zu vermeiden.

Nachteilig ist es bei den bekannten Neutralisationsanlagen, dass der Wirkungsgrad (Ausnutzung des im Gerät befindlichen Neutralisierungsmittels und der Aktivkohle) niedrig ist, da Kondensat die Aktivkohle und das Neutralisationsmaterial meist auf direktem Weg durchfließt. Dabei werden die Aktivkohle sowie das Neutralisationsmaterial im Wesentlichen nur in Strömungsrichtung verbraucht. Entsprechend of müssen diese Materialien erneuert werden, obwohl nur eine geringe Menge wirklich verbraucht ist. Die Neutralisationsanlage wird auf den Boden gestellt, um eine möglichst geringe Ein- und Auslaufhöhe zu erreichen. Die Fußböden sind kalt und kühlen damit auch das in der Neutralisationsanlage vorhandene Kondensat ab. Kondensatzuflüsse aus dem Heizkessel oder dem Schornstein sind jedoch warm, so dass das in der Neutralisationsanlage eintretende warme Kondensat wegen seiner geringen Dichte nach oben steigt und die Aktivkohle und das Neutralisationsmittel in senkrechter Richtung durchfließt.

Ein weiterer Nachteil besteht darin, dass Neutralisationsanlagen sich zusetzen oder verstopfen können. Die bekannten Geräte haben zwar einen Sicherheitsüberlauf, damit kein Kondensat im Heizkessel oder Schornstein aufsteigen kann, wodurch diese Geräte dann aber ihre Neutralisationsfunktion einstellen. Bei bekannten Neutralisationsanlagen mit Labyrinth-Durchlauf findet der Übergang zur jeweils nächsten Neutralisationskammer wechselweise oben und unten statt. Ist eine Kammer zugesetzt, muss das Kondensat aufsteigen und über einen Überlauf in die nächste Kammer fließen. Da sich unten in der Kammer wiederum kaltes Kondensat befindet, fließt das wärmere, neue Kondensat auf der Oberfläche waagerecht bis zur nächsten Trennwand, deren Überlauf in die nächste Kammer oben liegt; das Kondensat fließt weiter bis zur nächsten Trennwand mit Übertritt im unteren Kammerbereich, und es sinkt erst hier wieder ab und kann mit dem Neutralisationsmittel reagieren. Das in den beiden letzten Kammern befindliche Neutralisationsmittel wird dann nicht oder nur teilweise genutzt.

Ein weiterer Nachteil besteht darin, dass die Aktivkohlefilter und das Neutralisationsmittel während des laufenden Betriebes nicht ausgetauscht werden können. Die Geräte müssen demontiert, gereinigt, gewartet, neu bestückt und anschließend wieder zusammengebaut werden. Oftmals ist dazu Fachpersonal erforderlich.

Der Erfindung liegt die Aufgabe zugrunde, eine demgegenüber verbesserte Vorrichtung zur Neutralisation von sauren Verbrennungskondensaten zu schaffen.

Zur Lösung dieser Aufgabe ist die eingangs beschriebene Vorrichtung dadurch gekennzeichnet, dass unterhalb des Siebbodens mindestens eine Schlammabsetzkammer angeordnet ist, und dass der Kondensatzulauf oberhalb des Siebbodens benachbart zu diesem an der einen Behälterwand und der Kondensatablauf an der gegenüberliegenden Behälterwand ebenfalls direkt oberhalb des Siebbodens angeordnet ist, wobei in Strömungsrichtung vorzugsweise mehrere Schlammabsetzkammern hintereinander angeordnet sind.

Während des Durchflusses des Kondensats durch das granulatförmige Neutralisationsmittel wird dieses unter Schlammbildung teilweise aufgelöst, und der Schlamm sinkt durch den Siebboden in die Schlammabsetzkammer, so dass ein Verschlammen im Bereich der Neutralisationsmittelschicht weitgehend ausgeschlossen ist. Bei mehreren in Kondensatströmungsrichtung hintereinander angeordneten Schlammabsetzkammern werden diese in Strömungsrichtung weitgehend hintereinander mit Kondensat/Neutralisationsmittelschlamm gefüllt, so dass die Funktionsfähigkeit der Neutralisationsanlage über einen langen Zeitraum erhalten bleibt.

Weitere Merkmale der Erfindung sind in Unteransprüchen behandelt und deren vorteilhafte Auswirkungen sind in Verbindung mit der folgenden Beschreibung erläutert.

Die Erfindung wird im folgenden anhand der Zeichnungen näher beschrieben.

Es zeigen:
Figur 1 eine isometrische Darstellung einer Vorrichtung zur Neutralisation und Reinigung von sauren Verbrennungskondensaten mit mehreren modulartig in ein Gehäuse einsetzbaren Einzelkomponenten in Form von Neutralisationsbehältern und Aktivkohlefiltern.
Figur 2 zeigt im wesentlichen in isometrischer Darstellung eine Draufsicht auf die erfindungsgemäße Vorrichtung bei abgenommenem Deckel;
Figur 3 zeigt eine Schnittansicht gemäß der Schnittlinie III-III in Figur 1;
Figur 4 zeigt in vereinfachter Darstellung eine Schnittansicht eines quaderförmigen Aktivkohlefilters;
Figur 5 zeigt in vereinfachter Darstellung eine Schnittansicht einer zusätzlichen quaderförmigen Vorneutralisationskammer;
Figur 6 zeigt in schematischer Darstellung eine Draufsicht auf eine abgewandelte Ausführungsform der erfindungsgemäßen Neutralisationsanlage;
Figur 7 zeigt einen Vertikalschnitt einer Aktivkohlefiltereinheit;
Figur 7a zeigt einen Horizontalschnitt der Aktivkohlefiltereinheit;
Figur 8 zeigt eine Trennwand im Bereich einer Neutralisationskammer;
Figur 9 zeigt in schematisierter Darstellung eine Schnittdarstellung benachbarter Neutralisationskammern.

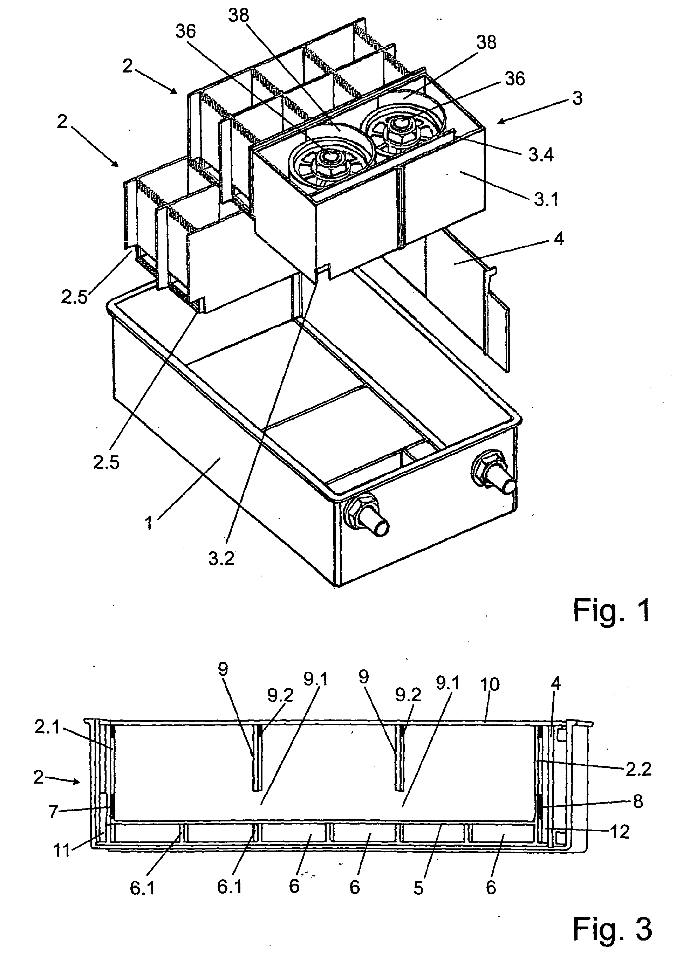

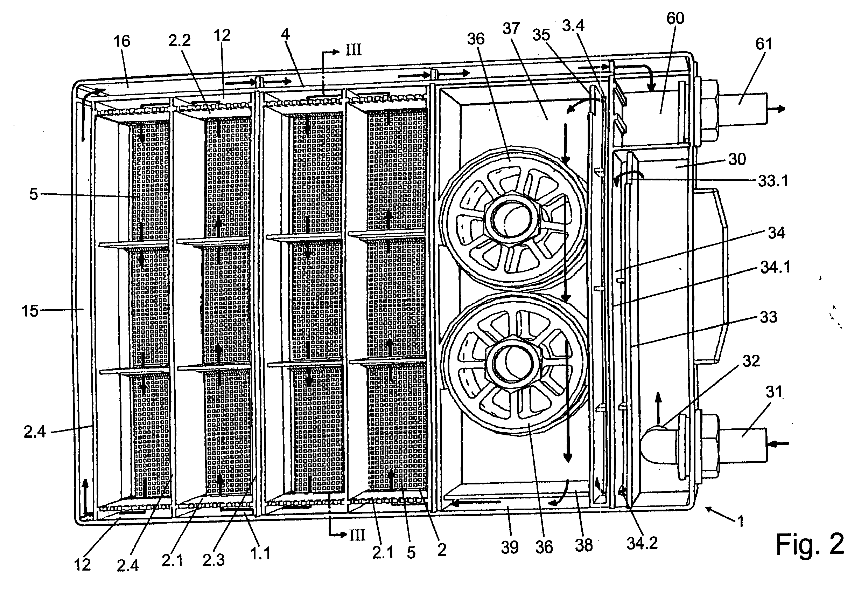

Die in Figur 1 dargestellte Neutralisationsanlage besteht aus einem im wesentlichen quaderfömigen Gehäuse 1, in das modulartig gestaltete Neutralisationsbehälter 2 und gegebenenfalls eine Aktivkohlefiltereinheit 3 gegeneinander austauschbar einsetzbar sind. Eine in das Gehäuse 1 einsetzbare Zwischenwand 4 dient in der anhand von Figur 2 noch zu beschreibenden Weise als Begrenzungswand für einen Kondensatrücklaufkanal.

Gemäß Figur 2 ist das Außengehäuse 1 mit einer vorgeschalteten Absetzkammer 30 ausgerüstet, in die eine Kondensateinlassleitung 31 mündet, die zur Erzielung eines Siphoneffektes einen Leitungs- oder Rohransatz 32 aufweist, der im unteren Bereich der Absetzkammer 30 ausmündet. Die Wand 33 der Absetzkammer 30 hat in ihrem oberen Wandbereich eine Öffnung 33.1 in Form eines Überlaufwehrs, das in eine Zwischenkammer 34 mündet, die durch eine Längswand 34.1 begrenzt ist. Diese Wand 34.1 bildet gleichzeitig eine Begrenzungswand für einen daran anschließenden Raum, in den gemäß den Figuren 1 und 2 die vorzugsweise modulartig gestaltete Aktivkohlefiltereinheit 3 eingesetzt werden kann. Diese Aktivkohlefiltereinheit 3 ist im Bodenbereich ihrer Außenwand 3.1 (siehe Figur 1) mit einer Kondensateinlassöffnung 3.2 versehen, die einer im unteren Bereich der Begrenzungswand 34 angebrachten Öffnung 34.2 gegenüber liegt. Die Öffnung 3.2 mündet in eine Vorkammer der Aktivkohleeinheit 3. Diese Kammer ist durch die Außenwand 3.1 und eine Zwischenwand 3.4 begrenzt, die in ihrem oberen Wandbereich eine Öffnung 3.5 in Form eines Überlaufwehrs aufweist. Über dieses Wehr 3.5 strömt zu reinigendes Kondensat in die die beiden zylinderförmigen Aktivkohlefilter 36 aufnehmende Kammer 37. Die Aktivkohlefilter 36 sind so durch Trennwände 38 abgeschirmt, dass das zu neutralisierende Kondensat unten in den ersten Filter eintritt und den Filter nach oben durchströmt. Anschließend strömt das Kondensat durch eine im Bodenbereich der zweiten Trennwand 38 befindliche Öffnung in den Bereich des zweiten Filters, um diesen wiederum von unten nach oben zu durchströmen. Das oben aus dem zweiten Filter 36 ausströmende Kondensat fließt anschließend über eine Wand 138, deren Oberkante unterhalb des oberen Randes des Außengehäuses 1 liegt, in eine weitere Vorkammer 39. An diese Vorkammer 39 schließt sich der Zulauf zu der eigentlichen Neutralisationseinheit an.

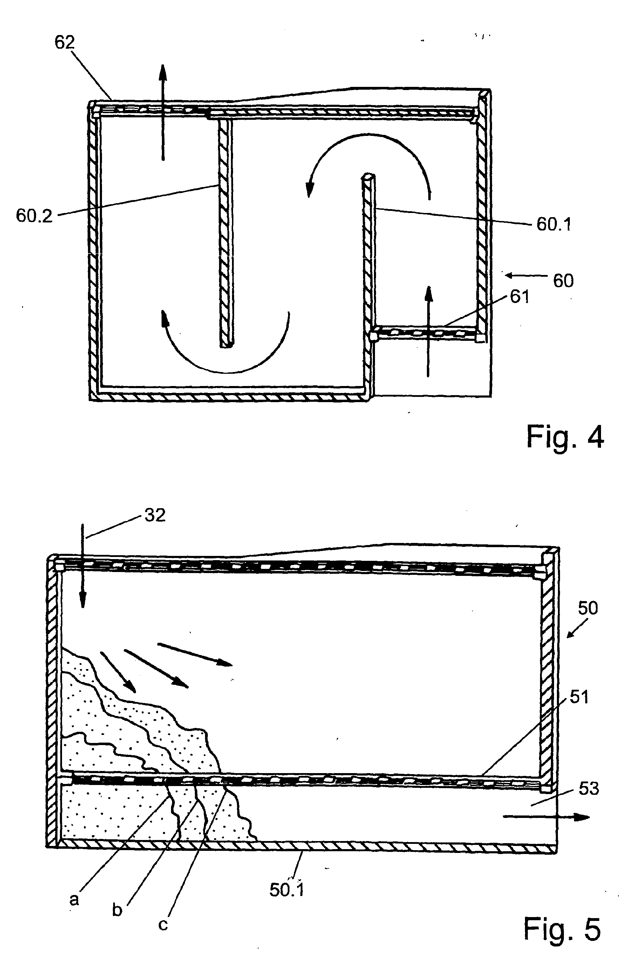

Gemäß den Figuren 2 und 3 enthält die erfindungsgemäße Vorrichtung zur Neutralisation von sauren Verbrennungskondensaten mindestens einen einen Siebboden 5 aufweisenden Neutralisationsbehälter 2 zur Aufnahme eines granulatförmigen Neutralisationsmittels, z.B. Magnesiumchlorid. Unter dem Siebboden liegt mindestens eine Schlammabsetzkammer 6. Ein Kondensatzulauf 7 ist oberhalb des Siebbodens 5 benachbart zu diesem im Bereich der einen Behälterwand 2.1 vorgesehen, während die gegenüberliegende Behälterwand 2.2 einen Kondensatablauf 8 aufweist, der ebenfalls oberhalb des Siebbodens 6 benachbart zu diesem angeordnet ist. Die Kondensatzu- und Kondensatabläufe 7, 8 sind vorzugsweise sieb- bzw. gitterförmig gestaltet.

Die die Kondensatzu- und abläufe 7, 8 aufweisenden Seitenwände 2.1, 2.2 bilden die Behälterstirnwände und sind kürzer als die in Kondensatströmungsrichtung - angedeutet durch die Pfeile - verlaufenden Behälterlängswände. Zwischen den Behälterlängswänden 2.3 bzw. 2.4 sind Querwände 9 vorgesehen, deren untere Ränder zur Bildung von Kondensatdurchflüssen oberhalb des Siebbodens 5 liegen. Auf den Behälterlängswänden 2.3; 2.4 liegt im wesentlichen abdichtend eine Deckelplatte 10 auf. Die unteren Ränder der Querwände 9 liegen mit Abstand oberhalb des Siebbodens 5, und die oberen Ränder der Querwände 9 liegen mit Abstand unterhalb der Deckelplatte 10. Die Behälterstirnwände 2.1 und 2.2 sind im wesentlichen kammartig gestaltet, um damit mindestens eine Kondensatdurchflussöffnung zu bilden.

Der den Kondensatzulauf 7 aufweisenden Behälterstirnwand 2.1 ist eine Kondensateinlasskammer 11 vorgeschaltet, und der den Kondensatablauf 8 aufweisenden Behälterstirnwand 2.2 ist eine Kondensatauslasskammer 12 nachgeschaltet. Eine Wand der Kondensateinlasskammer 11 ist durch die zugeordnete Seitenwand des Außengehäuses 1 gebildet, während eine Wand der Kondensatauslasskammer 12 durch die Zwischenwand 4 gebildet ist.

Wenn zu neutralisierendes Kondensat durch den Kondensatzulauf 7 in den mit granulatförmigem Neutralisationsmittel gefüllten Neutralisationsbehälter 2 einströmt, erfolgt bei gleichzeitiger Auflösung des Neutralisationsmittels eine Neutralisierung des Kondensats. Dabei bildet sich auch in Abhängigkeit von der Korngröße des Granulats ein Schlamm, der sich durch den Siebboden 5 in der darunter befindlichen Schlammabsetzkammer 6 ablagert, so dass eine Schlammansammlung oberhalb des Siebbodens 5 weitgehend unterbleibt. Die Schlammablagerung erfolgt gleichmäßig und oder aufeinanderfolgend in den durch die Trennwände 6.1 voneinander getrennten, aufeinanderfolgenden Schlammabsetzkammern 6. In Abhängigkeit von den Betriebsbedingungen lässt sich jedoch auch nicht immer eine den Zulauf 7 teilweise oder ganz verschließende Schlammablagerung oberhalb des Siebbodens vermeiden, so dass dann nach Füllung der Kondensateinlasskammer 11 mit Schlamm das zu neutralisierende Kondensat durch die oberhalb der Behälterstirnwand 2.1 befindlichen Kondensateinlassöffnungen in den Neutralisationsbehälter einströmen kann.

Für den Fall eines Verstopfens der sich unterhalb der einzelnen Querwand 9 befindenden Kondensatdurchflussöffnung 9.1 kann das Kondensat durch die oberhalb der Querwände 9 befindlichen Kondensatdurchflussöffnungen 9.2 jeweils in den nächsten Behälterabschnitt fließen. Aufgrund der erfindungegemäßen Ausgestaltung des Neutralisationsbehälters 2 mit vorzugsweise mehreren durch Querwände 9 abgegrenzten Neutralisationskammern bleibt selbst bei größerem Schlammanfall der einzelne Neutralisationsbehälter über lange Zeit funktionsfähig, bevor er gegebenenfalls gegen einen mit frischem Neutralisationsgranulat gefüllten Neutralisationsbehälter ausgetauscht werden muss.

Gemäß den Figuren 1 und 2 sind mehrere parallel nebeneinander liegende Neutralisationsbehälter 2 derart einander zugeordnet, dass die Kondensatablaufseite eines Neutralisationsbehälters jeweils an die Kondensatzulaufseite eines folgenden Neutralisationsbehälters angrenzt, wobei die Kondensatauslasskammer 12 eines Neutralisationsbehälters 2 jeweils mit der Kondensateinlasskammer eines nachfolgenden Neutralisationsbehälters in Verbindung steht, und zwar vorzugsweise durch jeweils im unteren Kammerbereich befindlichen Öffnungen 2.5, wie sie in Figur 1 angedeutet sind.

An die Kondensatauslasskammer 12 des letzten Neutralisationsbehälters 2 schließt ein zwischen der Behälterlängswand 2.4 und der Außenwand des Außenbehälters 1 verlaufender Sammelkanal 15 für gereinigtes Kondensat an. An diesen Sammelkanal 15 schließt ein weiterer Sammelkanal 16 an, der zwischen einer Außenwand des Außengehäuses 1 und der Zwischenwand 4 verläuft.

Die Vorrichtung weist gemäß weiterer Erfindung einen zusätzlichen mit Neutralisationsmittel auffüllbaren Neutralisationsbehälter 50 mit einem Siebboden 51 auf, der oberhalb von dem Boden 50.1 dieses zusätzlichen Netralisationsbehälters 50 liegt. Dieser zusätzliche Neutralisationsbehälter hat an seiner Oberseite einen durch den Pfeil 52 repräsentierten Kondensatzulauf; an der diesem Kondensatzulauf 52 gegenüberliegenden Behälterseite ist ein Kondensatablauf 53 vorgesehen, der unterhalb des Siebbodens 51 liegt.

In dem zusätzlichen Neutralisationsbehälter, der vorzugsweise auch anstelle eines Aktivkohlefilters in das Außengehäuse 1 eingesetzt werden kann, sind Schlammanhäufungen a, b, c andeutungsweise eingezeichnet, die verdeutlichen, wie beim Aufbau von solchen Schlammanhäufungen der freie Durchfluss des Kondensats durch den mit Neutralisationsgranulat gefüllten Behälter 50 möglich ist. Dieser zusätzliche Neutralisationsbehälter bildet eine erste Neutralisationsstufe und kann, wenn er z.B. durch Schlammablagerungen verstopft ist, aus dem Gehäuse 1 herausgenommen, gereinigt und nach Füllen mit neuem Neutralisationsmittel wieder in das Gehäuse 1 eingesetzt werden.

Zur besseren Raumausnutzung im Bereich der Aktivkohlefiltereinheit können an Stelle von zylinderförmigen Aktivkohlefilter 36 quaderförmige Aktivkohlefilter verwendet werden, wie sie schematisch in Figur 3 dargestellt sind. Der einzelne Aktivkohlefilter 60 hat ein im wesentlichen quaderförmiges Gehäuse mit einer durch ein Sieb oder Gitter 61 verschlossenen unteren Einlauföffnung und einer ebenfalls durch ein Sieb 62 verschlossenen, oberen Auslauföffnung. Im Inneren des mit Aktivkohle befüllten Behälters sind mehrere, im vorliegenden Fall zwei Trennwände 60.1 und 60.2 derart angeordnet, dass das hindurchströmende Kondensat mäanderförmig durch das Gehäuse strömt.

Für die Verwendung des Gesamtaggregates als Kondensatreinigungs- und Kondensatneutralisationsanlage für Öl- oder Gasbrenner sind die Abmessungen des Außengehäuses auf die Abmessungen des Öl- oder Gasbrenners abgestimmt, derart, dass das Gesamtaggregat unter dem Öl- oder Gasbrenner angebracht werden kann. Für einen üblichen Öl- oder Gasbrenner hat das Außengehäuse 1 z.B. eine Länge im Bereich von etwa 400 mm und eine Breite im Bereich von etwa 300 mm.

Die eigentliche Neutralisationseinheit hat zwischen dem Zulauf und dem Ablauf eine Länge in der Größenordnung von etwa 240 bis 280 mm bei einer Breite von ca. 90 mm.

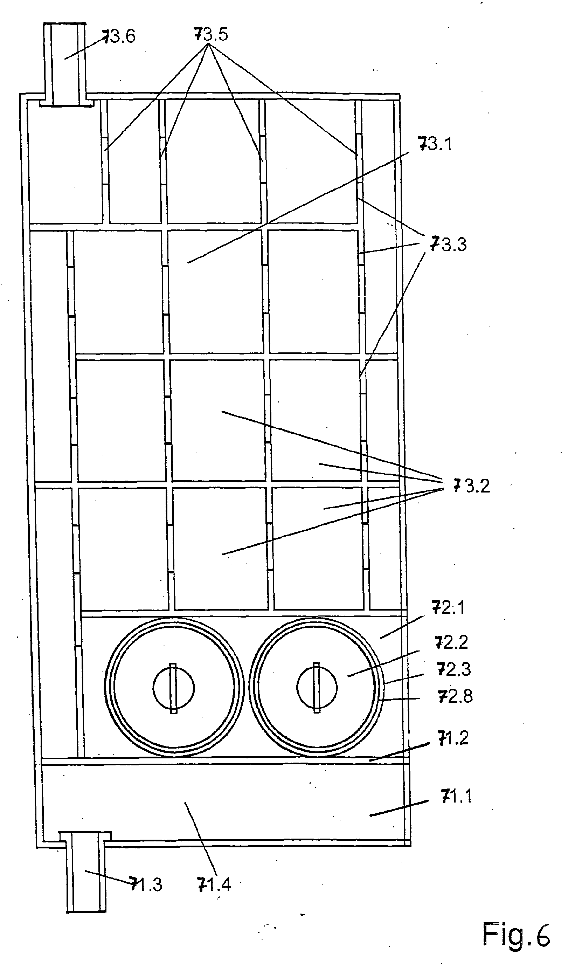

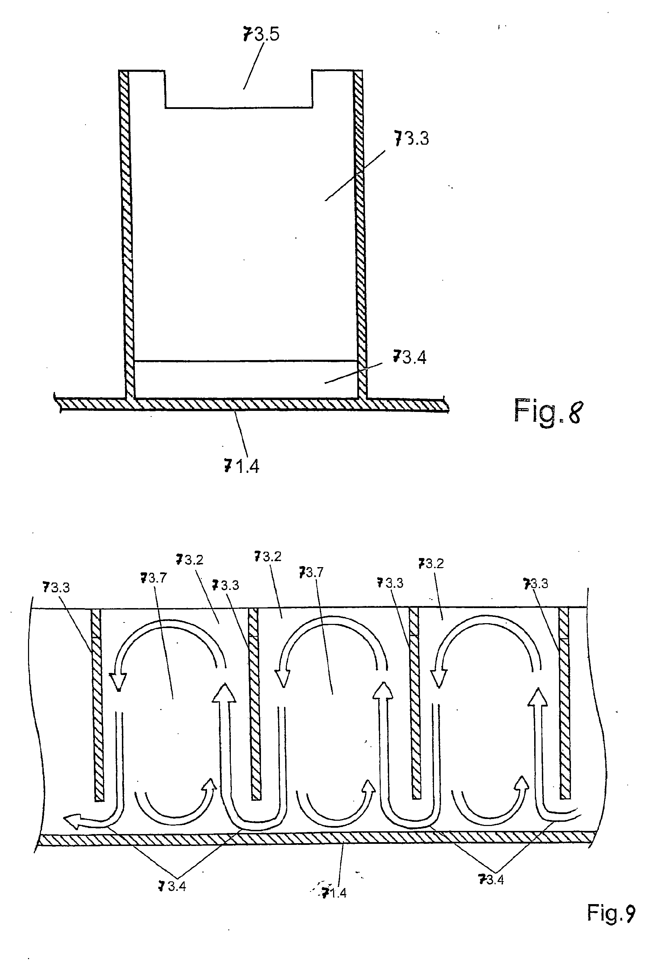

Die in den Figuren 6, 7, 7a, 8 und 9 dargestellten Konstruktionselemente werden im folgenden anhand ihrer Funktionsweise beschrieben.

Gemäß Figur 6 fließt das Kondensat durch den Zulauf 71.3 in die Absetzkammer 71.1, in der sich im Kondensat enthaltene Schwebeteilchen auf dem Behälterboden 71.4 absetzen. Über den Absetzkammerüberlauf 71.2 fließt das Kondensat in die Aktivkohlefiltereinheit 72.1 und dann durch die darin enthaltenen Aktivkohlefilter 72.2 und Filtergehäuse 72.3.

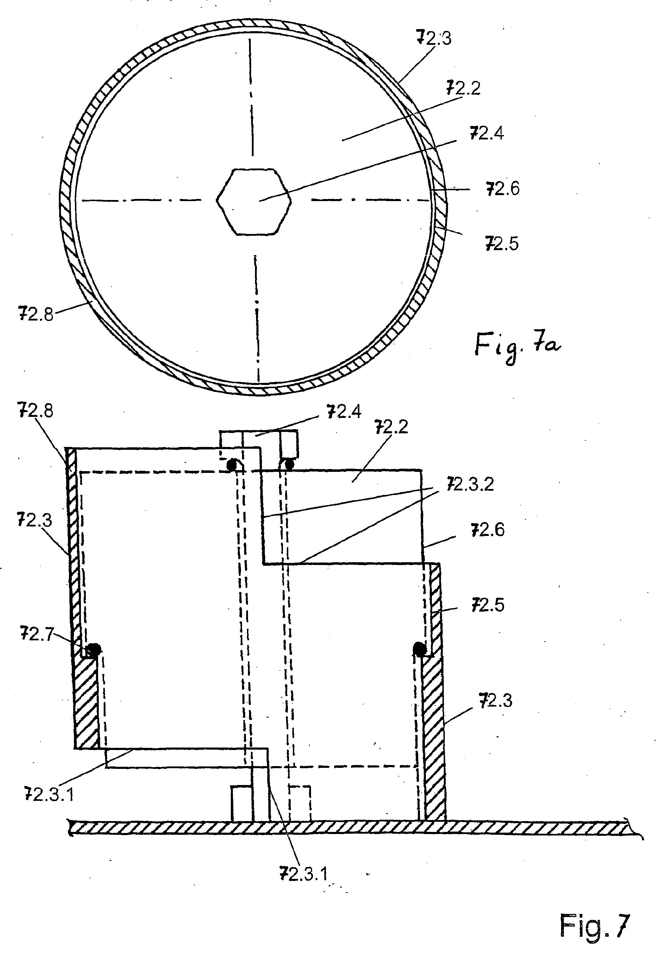

Die Figuren 7 und 7a zeigen einen Aktivkohlefilter 72.2 in dem Filtergehäuse 72.3. Das Filtergehäuse 72.3 ist so aufgebaut, dass das Kondensat den Aktivkohlefilter 72.2 von unten nach oben durchströmen muss. Das Filtergehäuse 72.3 hat eine kreisförmige Außenwand und ist so gebaut, dass das Kondensat unten durch die Aussparung 72.3.1 einströmt und oben über die Aussparung 72.3.2 abfließt. In das Filtergehäuse 72.3 wird der Aktivkohlefilter eingeführt und mit einer Schraube 72.4 gesichert. Zur Abdichtung zwischen der Filtergehäuse-Innenwand 72.5 und der Aktivkohlefilter-Außenwand 72.6 wird ein O-Ring 72.7 verwendet.

Auf den ersten Aktivkohlefilter 72.2 folgt ein weiterer Aktivkohlefilter 72.2 mit Filtergehäuse 72.3, und der oben beschriebene Vorgang wiederholt sich. Wenn ein Aktivkohlefilter 72.2 verstopft ist, kann das Kondensat über den Überlauf 72.8 des Filtergehäuses 72.3 fließen, und der nächste Aktivkohlefilter 72.2 übernimmt dann die Aufgabe des ersten Aktivkohlefilters 72.2, sodass das Gerät weitgehend wartungsfrei weiter arbeitet.

Zum Austauschen des Aktivkohlefilters 72.2 wird die Schraube 72.4 entfernt und der Aktivkohlefilter 72.2 kann nach oben entnommen werden. Ein neuer Aktivkohlefilter 72.2 kann dann in umgekehrter Richtung eingesetzt werden.

Das Kondensat strömt anschließend durch eine schematisiert dargestellte Aussparung bzw. Öffnung 74.1 der die Aktivkohleeinheit begrenzenden Trennwand 74 in einen Übergangskanal 75, an den sich die Neutralisationskammern 73.2 der Neutralisationseinheit 73.1 anschließen. In diesen Neutralisationskammern 73.2 wird entweder das Neutralisationsgranulat direkt eingefüllt oder es werden Patronen (o. Abb.) eingesetzt, die das Neutralisationsmittel enthalten. Der Zufluss des Kondensates erfolgt von unten durch eine Öffnung 73.4 unterhalb der Trennwand 73.3. In der Neutralisationskammer kann eine Verwirbelung 73.7 der Flüssigkeit stattfinden. Dadurch wird das Neutralisationsgranulat optimal durchströmt und verbraucht. Sollte sich eine Neutralisationskammer 73.2 zusetzen, kann das Kondensat über den Überlauf 73.5 in die nächste Neutralisationskammer 73.2 fließen usw. Der Ausfall einer Neutralisationskammer beeinträchtigt damit nicht die gesamte Neutralisationseinheit 73.1. Nach der letzten Trennwand fließt das Kondensat gereinigt und neutralisisert durch den Ablauf 73.6 ab.

## Patentansprüche

1. Vorrichtung zur Neutralisation von sauren Verbrennungskondensaten, enthaltend mindestens einen einen Siebboden (5) aufweisenden Neutralisationsbehälter (2) zur Aufnahme eines Neutralisationsmittels, das von dem Kondensat durchströmt wird, **dadurch gekennzeichnet, dass** unterhalb des Siebbodens mindestens eine Schlammabsetzkammer (6) angeordnet ist, und dass der Kondensatzulauf (7) oberhalb des Siebbodens (5) benachbart zu diesem an der einen Behälterwand (2.1) und der Konsendatablauf (8) an der gegenüberliegenden Behälterwand (2.2) ebenfalls oberhalb des Siebbodens (5) benachbart zu diesem angeordnet ist.

2. Vorrichtung nach Anspruch 1, **dadurch gekennzeichnet, dass** die die Kondensatzu- und Kondensatabläufe (7; 8) aufweisenden Behälterwände (2.1; 2.2) die Behälterstirnwände bilden und kürzer sind als die in Kondensatdurchflussrichtung verlaufenden Behälterlängswände (2.3; 2.4), zwischen denen mindestens eine Querwand (9) angeordnet ist, die oberhalb des Siebbodens (5) benachbart zu diesem eine Kondensatdurchflussöffnung aufweist, und dass unterhalb des Siebbodens (5) mindestens zwei durch eine senkrecht zur Kondensatdurchflussrichtung verlaufende Trennwand (6.1) voneinander getrennte Schlammabsetzkammern (6) angeordnet sind.

3. Vorrichtung nach Anspruch 2, **dadurch gekennzeichnet, dass** auf den Behälterlängswänden im wesentlichen abdichtend eine Deckelplatte (10) aufliegt, dass die unteren Ränder der Behälterstirnwände und der Querwände (9) mit Abstand oberhalb des Siebbodens liegen, dass die oberen Ränder der Querwände (9) mit Abstand unter der Deckelplatte (10) liegen und dass die Behälterstirnwände im Bereich ihres oberen Randes mindestens eine Kondensatdurchflussöffnung haben.

4. Vorrichtung nach Anspruch 2 oder 3, **dadurch gekennzeichnet, dass** der den Kondensatzulauf (7) aufweisenden Behälterstirnwand (2.1) eine Kondensateinlasskammer (11) vorgeschaltet und der den Kondensatablauf (8) aufweisenden Behälterstirnwand eine Kondensatauslasskammer (12) nachgeschaltet ist.

5. Vorrichtung nach einem der Ansprüche 1 bis 4, **dadurch gekennzeichnet, dass** sie parallel nebeneinanderliegend zwei oder mehrere Neutralisationsbehälter (2) aufweist, derart, dass die Kondensatablaufseite eines Neutralisationsbehälters jeweils an die Kondensatzulaufseite eines folgenden Neutralisationsbehälters angrenzt, und dass die Kondensatauslasskammer (12) eines Neutralisationsbehälters (2) jeweils mit der Kondensateinlasskammer eines folgenden Neutralisationsbehälters (2) in Verbindung steht, derart, dass das Kondensat mäanderförmig die aufeinanderfolgenden Neutralisationsbehälter durchströmt.

6. Vorrichtung nach Anspruch 6, **dadurch gekennzeichnet, dass** die einzelne Kondensatauslasskammer (12) durch eine im unteren Kammerbereich befindliche Öffnung mit der folgenden Kondensateinlasskammer in Verbindung stehen.

7. Vorrichtung nach einem der Ansprüche 1 bis 6, **dadurch gekennzeichnet, dass** sie ein Außengehäuse aufweist, in das mehrere Neutralisationsbehälter jeweils einzeln oder gruppenweise herausnehmbar eingesetzt sind.

8. Vorrichtung nach Anspruch 7, **dadurch gekennzeichnet, dass** eine Wand der Kondensateinlasskammer (11) durch die zugeordnete Seitenwand des Außengehäuses (1) und eine Wand der Kondensatauslasskammer (12) durch eine Zwischenwand (4) gebildet ist.

9. Vorrichtung nach Anspruch 8, **dadurch gekennzeichnet, dass** sie eine den Neutralisationsbehältern (2) vorgeschaltete Absetzkammer (30) für in dem zu behandelnden Kondensat enthaltene Schwebeteilchen oder sonstige Feststoffe enthält, die in einem oberen Wandbereich eine Öffnung (33.1) in Form eines Überlaufwehrs aufweist, an das eine Zwischenkammer (34) anschließt, die in einem unteren Wandbereich eine Kondensatdurchlassöffnung (34.2) aufweist, die mit einer Kondensateinlasskammer (11) in Verbindung steht, die der Stirnwand eines Neutralisationsbehälters (2) vorgeschaltet ist, die mit einem Kondensatzulauf (7) versehen ist.

10. Vorrichtung nach Anspruch 9, **dadurch gekennzeichnet, dass** die im unteren Wandbereich angeordnete Kondensatdurchlassöffnung (34.2) der Zwischenkammer in eine nachgeschaltete Vorkammer einer Aktivkohlefiltereinheit (3) mündet, die in einem oberen Wandbereich ein Überlaufwehr (3) aufweist.

11. Vorrichtung nach Anspruch 10, **dadurch gekennzeichnet, dass** die Aktivkohlefiltereinheit (3) mindestens einen Aktivkohlefilter (36) umfasst, dessen Zu- und Abläufe derart angeordnet sind, dass das Kondensat den Aktivkohlefilter von unten nach oben durchströmt.

12. Vorrichtung nach einem der Ansprüche 1 bis 11, **dadurch gekennzeichnet, dass** sie einen zusätzlichen mit Neutralisationsmittel auffüllbaren Neutralisationsbehälter (50) mit einem Siebboden (51) aufweist, der oberhalb von dem Boden (50.1) dieses zusätzlichen Neutralisationsbehälter (50) liegt, und dass dieser zusätzliche Neutralisationsbehälter an seiner Oberseite einen Kondensatzulauf (52) und an der diesem Kondensatzulauf (52) gegenüberliegenden Behälterseite einen Kondensatablauf (53) hat, der unterhalb des Siebbodens liegt.

13. Vorrichtung nach einem oder mehreren der vorhergehenden Ansprüche, **dadurch gekennzeichnet, dass** der Außenbehälter (1) einen Sammelkanal für gereinigtes bzw. neutralisiertes Kondensat aufweist, der in eine Auslasskammer (60) mündet, an die eine Kondensatauslassleitung (61) anschließt.

14. Vorrichtung nach Anspruch 9, **dadurch gekennzeichnet, dass** in die Absetzkammer (30) eine Kondensateinlassleitung (31) mündet, die zur Erzielung eines Siphoneffektes einen Leitungs- oder Rohransatz (32) aufweist, der im unteren Bereich der Absetzkammer (30) ausmündet.

15. Vorrichtung nach Anspruch 14, **dadurch gekennzeichnet, dass** einzelne Neutralisationsbehälter (2), die Aktivkohlefiltereinheit (3) und/oder der zusätzliche Neutralisationsbehälter (50) größenmäßig so aufeinander abstimmt, dass sie modulartig gegeneinander austauschbar in das Außengehäuse (1) einsetzbar sind.

16. Vorrichtung nach einem der Ansprüche 1 bis 15, **gekennzeichnet durch** einen einem Neutralisationsbehälter vorschaltbaren quaderförmigen Aktivkohlefilter (60), der an der einen Seite eine **durch** ein Sieb (61) verschlossene untere Kondensatzzulauföffnung und an der entgegen-gesetzten Seite eine **durch** ein Sieb (62) verschlossene obere Kondensatausströmöffnung aufweist und in seinem Inneren mit Trennwänden (60.1; 60.2) versehen ist, derart, dass das Kondensat mäanderförmig **durch** diesen zusätzlichen Aktivkohlefilter (60) strömt.

17. Vorrichtung zur Neutralisation von sauren Verbrennungskondensaten enthaltend
- eine Aktivkohleeinheit (72.1), die ein Filtergehäuse (72.3) mit einem in seinem Bodenbreich befindlichen Kondensatzulauf (72.3.1) und einem in seinem oberen Bereich befindlichen Kondensatablauf (72.3.2) aufweist, und
- eine an die Aktivkohleeinheit anschließende Neutralisationseinheit (73.1), die mindestens eine Neutralisationskammer (73.2) mit einem in ihrem unteren Bereich befindlichen Kondensatzulauf für das die Aktivkohleeinheit verlassende Kondensat aufweist,
**dadurch gekennzeichnet, dass** die Neutralisationseinheit (73.1) mehrere nebeneinander angeordnete Neutralisationskammern (73.2) mit derart gestalteten Trennwänden (73.3) enthält, dass der Kondensatzulauf in die einzelnen Kammern jeweils durch im unteren Trennwandbereich befindliche Öffnungen (73.4) erfolgt.

18. Vorrichtung nach Anspruch 17, **dadurch gekennzeichnet, dass** die Trennwände Überlauföffnungen (73.5) haben.

19. Vorrichtung nach Anspruch 17 oder 18, **dadurch gekennzeichnet, dass** der Aktivkohleeinheit (72.1) eine Absetzkammer (71.1) vorgeschaltet ist.

20. Vorrichtung nach Anspruch 19, **dadurch gekennzeichnet, dass** die Absetzkammer (71.1) einen der Aktivkohleeinheit (72.1) vorgeschalteten Überlauf (71.2) hat.

21. Vorrichtung nach einem der Ansprüche 17 bis 20, **dadurch gekennzeichnet, dass** das Filtergehäuse des Aktivkohlefilters in seinem Bodenbereich als Kondensatzulauf eine seitliche Aussparung (72.3.1) und in seinem oberen Bereich als Kondensatablauf eine seitliche Aussparung (72.3.2) aufweist.

22. Vorrichtung nach einem der Ansprüche 17. bis 21, **dadurch gekennzeichnet, dass** der Aktivkohlefilter (72.2) mittels eines O-Ringes (72.7) zwischen der Aktivkohlefilter-Außenwand und der Innenwand (72.5) des Filtergehäuses (72.3) montiert ist.
